# EUROPÄISCHE PATENTSCHRIFT

(11) **EP 1 883 324 B1**
(45) Veröffentlichungstag und Bekanntmachung des Hinweises auf die Patenterteilung: **15.11.2017**
(21) Anmeldenummer: 06741008.4
(22) Anmeldetag: 23.05.2006
(51) Int. Cl.: G03B 21/56, A44B 17/00

(54) **Projektionswand mit einer Verbindungsvorrichtung für die Projektionsfläche**
Projection screen with connecting device for the projection surface
Écran de projection avec un dispositif d'assemblage pour la surface de projection

(30) Priorität: 23.05.2005 AT 8722005; 15.03.2006 AT 4262006
(43) Veröffentlichungstag der Anmeldung: 06.02.2008
(73) Patentinhaber: Stumpfl, Reinhold, 4702 Wallern (AT)
(72) Erfinder: Stumpfl, Reinhold, 4702 Wallern (AT)
(74) Vertreter: Patentanwaltskanzlei Hübscher
(86) Internationale Anmeldenummer: PCT/AT2006/000209
(87) Internationale Veröffentlichungsnummer: WO 2006/125236

(56) Entgegenhaltungen:
- EP-A2- 0 891 723
- WO-A-03/104888
- BE-A3- 1 003 554
- JP-A- 2002 244 209
- US-A- 2 134 037
- US-A- 2 673 382
- US-A- 3 243 858
- US-A- 3 494 405
- US-A- 3 913 598
- US-A- 5 207 262
- US-A- 5 357 659
- US-A- 5 642 558
- US-B1- 6 703 129

## Beschreibung

Die Erfindung betrifft eine Verbindungsvorrichtung zum Verbinden eines ersten, die Verbindungsvorrichtung aufweisenden Teiles mit einem zweiten Teil, umfassend einen Rastteil mit einem Boden, an dem zumindest eine Seitenwand angeordnet ist, und der zur einrastenden Aufnahme eines am zweiten Teil angeordneten Gegenstücks ausgebildet ist, ein Flächenelement, insbesondere ein Bildwandtuch, eine Projektionswand, eine Bildwand, eine Plane, mit einer Fläche, die zumindest teilweise aus zumindest einem Kunststoff, an dem zumindest eine Verbindungsvorrichtung angeordnet ist, besteht, sowie eine Vorrichtung zur Wiedergabe von projizierten Bildern, umfassend zumindest ein Flächenelement, mit einer Flächenelement-Vorderseite und einer Flächenelement-Rückseite, mit einer Fläche, die zumindest teilweise aus zumindest einem Kunststoff, an dem zumindest ein Teil zumindest einer Verbindungsvorrichtung angeordnet ist, gebildet ist, zumindest ein aus Profilelementen gebildetes Rahmensystem mit einer Rahmensystem-Vorderseite, einer Rahmensystem-Rückseite und zumindest einer Rahmensystem-Seitenfläche.

Verbindungsvorrichtungen, insbesondere Druckknöpfe, auf flächigen Elementen die insbesondere aus Kunststoff sind, sind häufig großen Belastungen ausgesetzt, insbesondere spielt die Ausreißfestigkeit eine große Rolle. Häufiger Schwachpunkt ist dabei die Verbindungsstelle zwischen dem flächigen tuchartigen Element und der Verbindungsvorrichtung, besonders wenn die Verbindungsvorrichtung durch das Einbringen einer Materialschwächung, wie z.B. einem Loch oder einem Durchbruch, mit diesem Element befestigt wird, wie dies insbesondere bei Druckknöpfen der Fall ist. Ein Druckknopf ist ein Verschlussmittel aus zwei zumeist kleinen, runden Metall- oder Kunststoffteilen, von denen eines mit einer Vertiefung, das andere mit einem passenden Kopf versehen ist. Sie werden auf gegenüberliegenden Seiten eines Flächenelementes, z.B. eines Tuchs oder Stoffs durch Einschlagen angebracht, wozu das Material des Flächenelementes durchtrennt werden muss, und zum Schließen ineinander gedrückt. Speziell an den Verbindungsstellen mit einem Flächenelement treten unter anderem große Zug- und Scherkräfte auf, durch die das Flächenelement zumindest teilweise zerstört werden kann, beispielsweise aufreißt, wodurch der Druckknopf seinen Halt in dem Flächenelement verliert.

So ist z.B. aus der DE 20 2004 015 008 U1 eine Lichtbild-Projektionswand bekannt, die aus einem aus Stäben zusammengesetzten Rahmen und einer darin unter Spannung eingesetzten, aus einem elastisch nachgiebigen Tuch oder einer Folie bestehenden Projektionsfläche, wobei die Projektionsfläche mittels Druckknöpfen in dem Rahmen unter Spannung befestigt ist, besteht und bei der die Stäbe als Profilstäbe ausgeführt sind und in deren Nut der rahmenseitige Teil der Druckknöpfe verschieblich eingesetzt ist. Bei dieser Ausführung muss die Projektionsfläche durch das Einschlagen der Druckknöpfe durchtrennt werden, daraus ergibt sich die bereits beschriebene höhere Zerstörungsanfälligkeit der Projektionsfläche.

Die Dokumente JP2002244209 und WO03/104888 offenbaren eine Projektionswand mit einer Fläche und mit einer Verbindungsvorrichtung zum Verbinden der Projektionswand mit einem Rahmensystem. Die Dokumente US3243858 und US6703129 offenbaren eine Verbindungsvorrichtung mit einem Verbindungselement aus einem schweißbaren Polymer, das mit einer Fläche verschweißt ist. Das Dokument EP0891723 offenbart eine Verbindungsvorrichtung mit einem Verbindungselement, das durch einen Durchbruch eines Bodens der Verbindungsvorrichtung hindurch ragt. Es ist die Aufgabe vorliegender Erfindung, eine Verbindungsvorrichtung zu schaffen, die das Durchschlagen von Nieten, Ösen usw. durch Flächenelemente, z.B. Bildwandtücher, Planen, nicht erfordert.

Diese Aufgabe der Erfindung wird unabhängig dadurch gelöst, wie in Anspruch 1 beschrieben. Von Vorteil bei der erfindungsgemäßen Verbindungsvorrichtung ist, dass durch die Verwendung eines mit dem Kunststoff des Flächenelementes verschweißbaren Verbindungselementes die auftretenden Kräfte in eine größere Fläche, nämlich die gesamte Schweißstelle, welche üblicherweise um ein Vielfaches größer sein kann als die Verbindungsfläche bei herkömmlichen Druckknöpfen, abgeleitet werden, wodurch die Flächenbelastung sinkt. Es sind damit auch keine Aufdoppelungen im Verbindungsbereich, über welche derzeit eine größere Ausreißfestigkeit hergestellt wird, mehr nötig, sodass nicht nur Fertigungszeit eingespart und damit die Durchlaufzeit bzw. Produktivität gesteigert werden kann, sondern damit auch ein optisch ansprechenderes und damit besser verkäufliches Produkt erreicht werden kann. Darüber hinaus ist auch von Vorteil, dass eine bei einer Ausbildung des Flächenelementes als Projektionsfläche, diese bis zum Tragrahmen verwendet werden kann, da die üblicherweise in Bezug auf eine Projektionsfläche rückwärtige Befestigungsverbindung auf der Projektionsfläche nicht wahrzunehmen ist. Darüber hinaus wird durch das erfindungsgemäße Verfahren die Effizienz des Herstellungsprozesses des Flächenelementes gesteigert, indem die Anordnung des Verbindungselementes zumindest großteils automatisiert durchgeführt werden kann. Zudem kann gegebenenfalls eine Nachjustierung der Verbindungsvorrichtung am Flächenelement durch einfaches Erwärmen des Verbindungselementes durchgeführt werden, um damit fehlerhaft platzierte Verbindungsvorrichtungen nachträglich richtig zu positionieren. Auch die Reparatur von zerbrochenen Verbindungsvorrichtungen wird damit vereinfacht, indem wiederum die Verbindungsvorrichtung, d.h. dessen Verbindungselement auf eine erhöhte Temperatur erwärmt wird, wodurch dieses vom Flächenelement entfernt und durch eine neue Verbindungsvorrichtung ersetzt werden kann.

Gemäß einer Ausführungsvariante der Erfindung ist vorgesehen, dass das Polymer des Verbindungselementes ausgewählt ist aus einer Gruppe umfassend Polyethylen, Polypropylen, Polyvinylchlorid, Polymethacrylate, Polystyrol, Acrylatester, Zelluloseester, Polyamide, Polycarbonate und thermoplastische Elastomere. Durch die Schweißbarkeit dieser Werkstoffe ist eine sehr dauerhafte Verbindungsmöglichkeit mit dem Flächenelement möglich, wobei besonders bevorzugt ein Polymer ausgewählt wird, das in seinen Eigenschaften jenen des Polymers des Flächenelementes zumindest annähernd entspricht, insbesondere aus demselben Material ist. Das Verbindungselement kann gemäß einer weiteren Ausbildung den Vorsprung seitlich nicht oder nur teilweise überragen und ferner kann das Verbindungselement an seiner inneren Oberfläche eine zum stufenförmigen Vorsprung komplementäre Oberflächenform aufweisen. Mit diesen Erscheinungsformen ist eine individuelle Anpassung an jeweils benötigte Einsatzbereiche möglich.

Eine weitere Variante sieht vor, dass am Boden, der Seitenwand gegenüberliegend, ein Verstärkungselement angeordnet ist, das vorzugsweise aus einem metallischen Werkstoff besteht. Dabei kann vorgesehen sein, dass das Verstärkungselement teilweise beabstandet zum Boden und unter Ausbildung einer, insbesondere nutförmigen, Ausnehmung an diesem befestigt ist und das Verbindungselement in diese Ausnehmung eingreift. Damit wird einerseits eine Verstärkung der Verbindungsvorrichtung an sich erreicht, bzw. wird wiederum die Ausreißfestigkeit des Verbindungselementes vom Rastelement durch das Eingreifen in diese nutartige Ausnehmung zwischen Verstärkungselement und Rastteil erhöht.

Eine weitere Variante sieht vor, dass das Verstärkungselement plättchenförmig ausgebildet ist, bzw. kann das Verstärkungselement auch flügelartige Fortsätze aufweisen, in denen zumindest ein Durchbruch oder eine Ausnehmung angeordnet ist, um einerseits eine große Fläche aus bereits erwähnten Gründen zur Verfügung zu stellen, und andererseits die Verbindungsvorrichtung möglichst flach zu gestalten, sodass diese am Flächenelement möglichst nicht hervortritt. In einer weiteren Ausbildung, die nicht Teil der vorliegenden Erfindung ist, ist es auch denkbar, dass am Verbindungselement ein Adapterstück angeordnet ist zur Anordnung, insbesondere beabstandeten, des Verbindungselementes am Boden und/oder der Seitenwand des Rastteiles, wobei dieses Adapterstück bevorzugt zwischen dem Verbindungselement und dem Rastteil angeordnet wird. Durch dieses Adapterstück wird es möglich, das Rastteil und das Verbindungsmittel aus sehr unterschiedlichen Werkstoffen zu fertigen, die gegebenenfalls ohne Adapterstück keine ausreichende Haftung aneinander zeigen würden.

In einer weiteren Ausbildung, die nicht Teil der vorliegenden Erfindung ist, dazu ist vorgesehen, dass das Adapterstück eine Ausnehmung zur Aufnahme eines weiteren Befestigungsmittels, z.B. einer Klammer, eines hakenförmigen Elementes oder dgl., aufweist, wozu dieses Adapterstück z.B. einen zumindest annähernd U-formigen Querschnitt aufweisen kann, wobei die Ausnehmung durch die vom Boden des Rastteils beabstandete Halterung des Verbindungselementes gebildet ist. Diese Ausnehmung kann dabei eine durchgehende Öffnung sein, sodass beispielsweise die hakenförmigen Elemente durch diese Öffnung hindurchragen und auf zumindest einer Seite des Adapterstückes einhaken. Die erfindungsgemäße Verbindungsvorrichtung wird hierdurch vielfältiger verwendbar, indem alternativ auch andere Verbindungsmethoden bzw. Verbindungselemente einsetzbar sind.

Zur Erhöhung der Ausreißfestigkeit kann das Adapterstück in die zwischen dem Verstärkungselement und dem Boden des Rastteils gebildete Ausnehmung eingreifen.

Eine weitere Ausbildung, die nicht Teil der vorliegenden Erfindung ist, sieht vor, dass das Adapterstück zumindest eine Ausnehmung aufweist, in die der Rastteil eingesetzt werden kann, wodurch nicht nur die Verbindung zwischen dem Rastteil und dem Adapterstück verbessert werden kann, sondern auch die Bauhöhe der Verbindungsvorrichtung reduziert bzw. gering gehalten werden kann. Zudem ist damit eine Materialeinsparung bei der Verbindungsvorrichtung erzielbar.

Nach einer weiteren Ausbildung, die nicht Teil der vorliegenden Erfindung ist, kann das Adapterstück aus einem zum Verbindungselement unterschiedlichen Polymer bestehen, wodurch unterschiedlich harte Werkstoffe für das Adapterstück und das Verbindungselement verwendet werden können um damit die mechanische Festigkeit der Verbindungsvorrichtung zu verbessern.
Dabei ist es möglich, dass das Polymer des Verbindungselementes eine im Vergleich zum Polymer des Adapterstückes geringere Härte aufweist, wodurch eine gute Anpassbarkeit an das folienartige Flächenelement möglich ist und zudem die Verbindungsvorrichtung eine entsprechende Eigensteifigkeit aufweist.

Gemäß einer Weiterbildung der Erfindung ist vorgesehen, dass das Rastteil als Druckknopfunterteil ausgebildet ist, sodass auf bewährte Verbindungstechniken zurückgegriffen werden kann. Das Rastteil kann aber ebenso als Haken, kopfförmig, polygonal etc. ausgebildet sein.

Eine weitere Variante sieht vor, dass das Rastteil aus einem metallischen Werkstoff besteht, sodass ein oftmaliges Öffnen und Schließen ermöglicht wird.

Am Verbindungselement kann zumindest ein flügelartiger Fortsatz ausgebildet und in dem zumindest einen flügelartigen Fortsatz kann zumindest ein Durchbruch oder eine Ausnehmung angeordnet sein. Vorteilig sind dadurch eine optimierte Einbindung des Verbindungselementes in das Flächenelement sowie eine geringere Bauhöhe.

Das Verbindungselement kann mit dem Flächenelement nach einer Ausführungsvariante durch Hochfrequenz- oder Ultraschallschweißen verschweißt sein, sodass die thermische Belastung des Flächenelementes möglichst gering gehalten und das Risiko der Verbrennung des Kunststoffes der Fläche des Flächenelementes minimiert werden kann.

Eine weitere Variante sieht vor, dass das Verbindungselement an die Fläche mit einer werkzeugspezifischen Prägung aufgeformt ist, um damit eine Art Verhakungseffekt und in der Folge eine festere Verbindung des Verbindungselementes mit dem Kunststoff des Flächenelementes zu erreichen.

Gemäß einer Ausgestaltung des Flächenelementes kann die Fläche zumindest im Bereich der Verbindungsvorrichtung mehrlagig ausgeführt sein um die Ausreißfestigkeit der Verbindung weiter zu erhöhen.

Die Prägung kann als Rändelung mit radialen Stegen ausgebildet sein, sodass der oben angesprochene Verhakungseffekt in allen Richtungen der Fläche zum tragen kommt. Verfahrensgemäß kann die Schweißverbindung durch Hochfrequenz- oder Ultraschallschweißen hergestellt werden, wobei wiederum die thermische Belastung des Flächenelementes möglichst gering gehalten und das Risiko der Verbrennung des Kunststoffes der Fläche des Flächenelementes minimiert werden kann.

Eine Variante des erfindungsgemäßen Verfahrens sieht vor, dass die Prägung während und/ oder nach dem Schweißen in das zumindest noch zähplastische Verbindungselement zumindest bereichsweise eingebracht wird, sodass keine zusätzliche thermische Belastung für das Flächenelement erforderlich ist.

Eine zur Verbindung mit der Fläche des Flächenelementes zur Verfügung stehende Fläche des Verbindungselementes kann während und/oder nach dem Schweißen vergrößert und die Vergrößerung der Fläche kann während des Prägens durchgeführt werden - dies ist hinsichtlich des besseren Lastabtrages auf eine größere Fläche von Vorteil.

Schließlich ist es möglich, zur Vergrößerung der Fläche das Verbindungselement zumindest bis in einen zähplastischen Zustand zu erwärmen. Hiermit kann einerseits durch z.B. Pressung oder mechanische Kraftausübung eine dünnere und dadurch weniger auftragende Einbindung des Verbindungselementes in das Flächenelement erreicht werden, andererseits ist eine allfällige Lagekorrektur leichter möglich.

Der erste Teil der Verbindungsvorrichtung kann an der dem Flächenelement gegenüber liegenden Seite angeordnet sein, wodurch die Projektionsfläche zur Gänze zum Betrachten von darauf projizierten Bildern zur Verfügung steht.

Um die Projektionsfläche des Flächenelements bestmöglich auszunutzen, kann es vorgesehen sein, dass der erste Teil der Verbindungsvorrichtung in einem Randbereich des Flächenelements angeordnet ist.

Möglich ist es auch, dass das Flächenelement größer als die vom Rahmensystem umschriebene Fläche ist, insbesondere diese Fläche zumindest bereichsweise überragt, wodurch einerseits eine größere Variabilität der Vorrichtung gegeben ist, beispielsweise wenn das Flächenelement an unterschiedlichen Rahmensystemen angebracht wird, andererseits ermöglicht ein größeres Flächenelement eine verbesserte Befestigungsmöglichkeit.

Gemäß einer Weiterbildung ist es vorgesehen, dass die die Fläche zumindest bereichsweise überragenden Segmente des Flächenelementes das Rahmensystem zumindest bereichsweise umhüllen, z.B. diese um Außenkanten des Rahmensystems umgeschlagen werden. Eine Verbesserung des vor beschriebenen Effekts kann dadurch erreicht werden, zudem kann das Rahmensystem mit dem Flächenelement kaschiert werden.

Werden diese Segmente durch die Verbindungsvorrichtung am Rahmensystem gehaltert, so ist eine rasche Aufstellbarkeit der Vorrichtung, insbesondere unter Zeitdruck, gegeben.

Weiters kann es vorgesehen sein, dass die Segmente durch die Verbindungsvorrichtung am Flächenelement gehaltert werden. Für die Halterung brauchen keine zusätzlichen Verbindungselemente eingesetzt werden, was die Handhabbarkeit bzw. Aufstellbarkeit wesentlich erleichtert.

Möglich ist es, dass die Verbindungsvorrichtung als Druckknopf, Klammer, Haken, Klettverschluss, Clipverschluss, Einschubverschluss, Splintverschluss o. dgl. ausgebildet ist, wobei für jedes Flächenelement bzw. für jeden Anwendungsfall eine speziell darauf abgestimmte Verbindungsvorrichtung eingesetzt werden kann. Es ist natürlich auch möglich, dass innerhalb eines Systems unterschiedliche Verbindungsvorrichtungen herangezogen werden.

Um die Handhabbarkeit weiter zu verbessern, kann es vorgesehen sein, dass die Verbindungsvorrichtung lösbar ausgebildet ist.

Ist die Verbindungsvorrichtung aus zumindest zwei Teilen gebildet, wobei beispielsweise ein Teil am Flächenelement und ein Teil am Rahmensystem angebracht sein kann, ist die separate Aufbewahrung bzw. Transport von darüber hinaus gehenden Verbindungsvorrichtungen nicht notwendig. Das Aufstellen der Vorrichtung am Einsatzort kann dadurch weiter beschleunigt werden.

Wie bereits beschrieben, kann die Fläche zumindest bereichsweise überragenden Segmente des Flächenelementes das Rahmensystem zumindest bereichsweise umhüllen, z.B. diese um Außenkanten des Rahmensystems umgeschlagen werden, sein, wodurch ein allfälliger Manipulationsaufwand verringert werden kann.

Auch kann es vorgesehen sein, dass zueinander unterschiedliche Verbindungsvorrichtungen angeordnet sind. Beispielsweise können in Bereichen mit höherer Zugbelastung, beispielsweise im oberen und unteren Rahmenbereich, Verbindungsvorrichtungen mit höherer Widerstandsfähigkeit, als beispielsweise an den Seiten des Rahmensystems, eingesetzt werden.

Insbesondere im Randbereich kann am Flächenelement zumindest ein Durchbruch angeordnet sein, der ein Abringen des Flächenelements auch an anderen bzw. weiteren Rahmensystemen ermöglicht.

Am Flächenelement im Randbereich des Durchbruchs kann zumindest bereichsweise ein Verstärkungselement, bevorzugt gebildet aus einem metallischen Werkstoff, z.B. eine Öse, ein Ring und dgl., angeordnet sein. Einer allfälligen Beschädigung des Flächenelements, beispielsweise durch auftretende Spannungen oder Einwirken von Druck oder Schlag, kann somit vorgebeugt werden.

Es kann vorgesehen sein, dass am Rahmensystem zumindest eine Halte- und/oder Rastvorrichtung angeordnet ist. Diese Halte- und/oder Rastvorrichtung ermöglicht es bei Bedarf das Flächenelement rasch und weitgehend ohne Zuhilfenahme von Verbindungsvorrichtungen am Rahmensystem anzubringen. Beispielsweise kann das Flächenelement analog einer LKW-Plane am Rahmensystem befestigt werden.

Die Halte- und/oder Rastvorrichtung kann zumindest bereichsweise durch den Durchbruch hindurchragen und somit ein eine Lageänderung des Flächenelements weitgehend verhindern. Auch ist diese Art der Anbringung besonders bei Verwendung der Vorrichtung im Außenbereich bzw. im bewitterten Bereich vorteilig.

Als zusätzliche Sicherung kann an einem die Halte/ und oder Rastvorrichtung überragenden Teil nach Anbringen des Flächenelementes eine Sicherungsvorrichtung, beispielsweise ein Zapfen, ein Splint, angeordnet sein.

Dieser überragende Teil kann ringförmig oder nasenförmig oder hakenartig ausgebildet sein, auch ist eine Mischung der genannten Formen möglich. Ist das Flächenelement zumindest bereichsweise elastisch, so ermöglicht das Anbringen des Flächenelements an den überragenden Teilen eine weitgehend glatte Anbringung bzw. Aufhängung des Flächenelements.

Ferner kann vorgesehen sein, dass die Verbindungsvorrichtung an der Flächenelement-Rückseite angeordnet ist, wodurch die Verbindungsvorrichtung in einem Arbeitsgang bei der Produktion des Flächenelements angebracht werden kann.

Schließlich ist es möglich, dass das Flächenelement, insbesondere die Segmente, das Rahmensystem zumindest annähernd vollständig umhüllen, z.B. dieses dem Rahmensystem übergestülpt wird, wodurch bevorzugt Vorrichtungen mit kleiner Projektionsfläche rasch in Betriebsbereitschaft versetzt werden können.

Zum besseren Verständnis wird die Erfindung im nachfolgenden anhand der in den Zeichnungen dargestellten Ausführungsbeispiele näher erläutert.

Es zeigen jeweils in stark schematisch vereinfachter Darstellung:
- Fig. 1: eine erfindungsgemäße Verbindungsvorrichtung;
- Fig. 2: einen Querschnitt durch eine Verbindungsvorrichtung;
- Fig. 3: eine Ausführungsvariante der Erfindung mit einem plättchenförmigen Verstärkungselement;
- Fig. 4: eine Ausführungsvariante der auf einem Flächenelement angeordneten Verbindungsvorrichtung mit einem Adapterstück;
- Fig. 5: die Anordnung einer Verbindungsvorrichtung auf einem Flächenelement;
- Fig. 6: einen Längsschnitt einer Verbindungsvorrichtung mit Verstärkungselement, eingebettet in ein Adapterstück;
- Fig. 7: die Schrägansicht einer erfindungsgemäßen Vorrichtung zur Wiedergabe von projizierten Bildern;
- Fig. 8: eine mögliche Eckausbildung der Vorrichtung;
- Fig. 9: einen Schnitt durch ein Profilelement mit angeordnetem Flächenelement;
- Fig. 10: einen weiteren Schnitt durch ein Profilelement mit umhüllendem Flächenelement.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1 oder 5,5 bis 10.

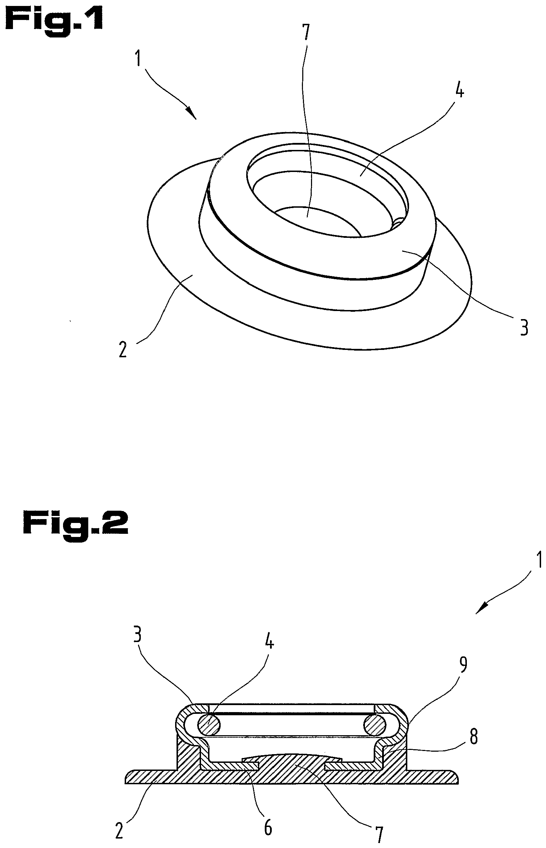

Fig. 1 zeigt eine erfindungsgemäße Verbindungsvorrichtung 1, die aus zumindest einem Verbindungselement 2 sowie zumindest einem Rastteil 3 besteht, wobei bei diesem Ausführungsbeispiel das Rastteil 3 mit einem innen liegenden Verrastelement ausgestattet ist, z.B. in Form einer Ringfeder 4. Das Verbindungselement 2 besteht erfindungsgemäß aus einem schweißbaren Polymer, insbesondere aus Polyethylen, Polypropylen, Polyvinylchlorid, Polymethacrylat, Polystyrol, Acrylatester, Celluloseester, Polyamide, Polycarbonat, einem thermoplastischen Elastomer, wie z.B. einem TPE, sowie Mischungen daraus.

Das Verbindungselement 2 ist mit einem flachen, hutkrempenförmigen Rand ausgebildet, der bevorzugt über das Rastteil seitlich vorragt. Dieser Rand des Verbindungselements 2 dient zur Aufformung, insbesondere zum Verschweißen, an ein Flächenelement 5.

Der Rand kann Teil eines zumindest annähernd tellerförmigen Verbindungselementes 2 sein, welches am Rastteil 3 befestigt ist, wobei selbstverständlich erfindungsgemäß die gesamte, vom Rastteil 3 abweisende Oberfläche dieses Verbindungselementes 3 zum Verschweißen mit dem Flächenelement 5 herangezogen werden kann.

Das Rastteil 3 ist bei dieser Ausführungsvariante bevorzugt als Druckknopfunterteil ausgebildet und besteht insbesondere aus einem metallischen Werkstoff. In weiterer Folge kann dieses Rastteil 3 auch aus einem den jeweiligen anwendungsspezifischen mechanischen und thermischen Anforderungen entsprechenden Kunststoff gefertigt sein.

Obwohl das Rastteil 3 mit einem zumindest annähernd im Querschnitt betrachtet kreisförmigen Aufnahmebereich für ein in die Verbindungsvorrichtung 1 einrastendes Gegenstück ausgebildet ist, kann dieser aber auch eine dreieckige, quadratische, rhombusförmige, elliptische oder polygonale Gestalt annehmen.

Die Ringfeder 4 ist innen in den oberen Bereich des Rastteils 3 eingelegt, dient, wie allgemein bekannt, zum kraftschlüssigen Einrasten eines Oberteils, z.B. eines Druckknopf-Kugelteils oder eines sonstigen Verschlussteils, und besteht zumeist aus einem metallischen Werkstoff, insbesondere einem Bronze-Federdraht. Gerade bei hoher Anforderung an die Verschlusskraft, insbesondere beim Verbinden von Flächenelementen 5 aus Kunststoff oder Textilien, ist diese Art des Verschlusses durch ringförmige Federn besonders geeignet. Insbesondere bei der Anwendung der Erfindung im annähernd lotrechten Gebrauch und dem dadurch unterschiedlichen Spannungsverlauf ist eine hohe Verschlusskraft mit großer Öffnungssicherheit bei Seitenzug von Vorteil, z.B. bei Projektionswänden, Planen, Werbeeinrichtungen, Bildwänden.

Aus Fig. 2 ist der Aufbau dieser Verbindungsvorrichtung 1 im Längsschnitt ersichtlich. Ein Boden 6 des Rastteils 3 weist hier einen Durchbruch 7 in Form einer Bohrung auf, durch den das Verbindungselement 2 zumindest teilweise ragt, vorzugsweise den Boden 6 überragt. Dieses Hinein- bzw. Überragen in den bzw. durch den Durchbruch 7 durch das Verbindungselement 2 bewirkt durch die Verteilung der angreifenden Kräfte auf eine größere Fläche eine verbesserte Belastungsfähigkeit als z.B. eine punktförmige Verbindung in Bezug auf Ausreißfestigkeit, Widerstand gegen Seitenzug, Schlag und Stoß, insbesondere wenn das Verbindungselement 2 formschlüssig an einer Seitenwand des Durchbruchs anliegt.

Der Durchbruch 7 kann aber auch eine andere als die kreisförmige Querschnittsform aufweisen. Des Weiteren ist es möglich, dass die den Durchbruch 7 begrenzende Seitenwand stufenförmig ausgebildet ist und dass das Verbindungselement 2 diese Stufenform im Bereich des Durchbruchs 7 nachbildet.

Das Rastteil 3 weist eine, bevorzugt an den Boden 6 angeformte Seitenwand 8 auf, die sich senkrecht vom Boden 6 weg erstrecken kann und an jener Oberfläche des Bodens angeordnet ist, die der Oberfläche an der das Verbindungselement befestigt ist gegenüberliegt. Diese Seitenwand 8 des Rastteils 3 kann einen Vorsprung 9 aufweisen, also an seiner äußeren Oberfläche stufenförmig ausgebildet sein. Das Verbindungselement 2 kann nun derart ausgebildet sein, dass es diese Außenkontur der Seitenwand 8 nachbildet. Dabei kann nach einer bevorzugten Ausführungsvariante vorgesehen sein, dass das Verbindungselement 2 die Seitenwand 8 seitlich nicht oder nur teilweise überragt, sodass also das Verbindungselement 2 nur bis in eine Höhe im Bereich der Abstufung ragt. Durch diese Ausgestaltungen kann eine, insbesondere flexible, Einbettung für das Rastteil 3 mit erhöhter Abziehfestigkeit des Verbindungselementes 2 vom Rastteil 3 erreicht werden, wobei durch das Vermeiden des seitlichen Überragens ein unbeabsichtigtes Abziehen des Verbindungselementes 2, wenn dieses nicht mit dem Boden 6 und/oder der zumindest einen Seitenwand 8 verbunden ist, weitgehend verhindert werden kann.

Generell sei angemerkt, dass das Rastteil 3 mehr als eine Seitenwand 8 aufweisen kann, wenn dieses z.B. nicht als runder Druckknopf sondern als Rastteil mit polygonalem Querschnitt ausgeführt ist.

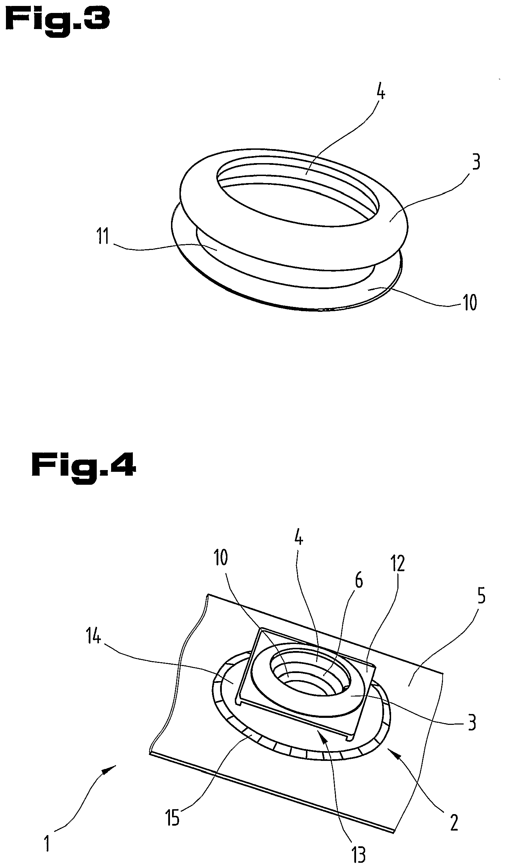

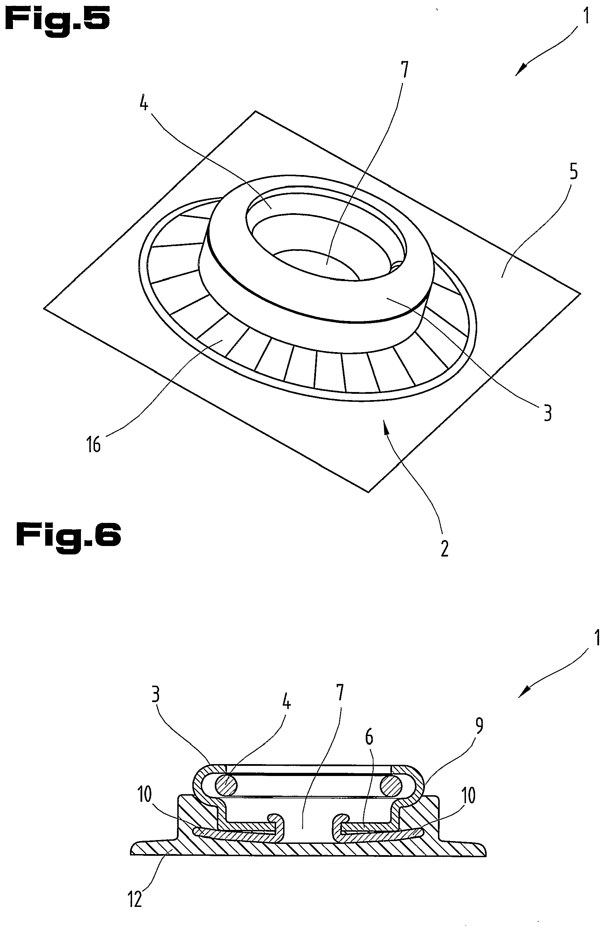

In Fig. 3 wird eine Ausführungsvariante der Erfindung dargestellt, bei der am Boden 6 der Verbindungsvorrichtung 1 ein, insbesondere plättchenförmiges, Verstärkungselement 10 angeordnet ist, insbesondere mit dem Boden 6 verbunden ist (noch besser aus Fig. 6 ersichtlich). Dieses Verstärkungselement 10 besteht insbesondere aus einem metallischen Werkstoff und ist mit dem Rastteil kraftschlüssig unter Bildung einer distanzwahrenden, nutförmigen Ausnehmung 11 verbunden. Auch hierbei erweist sich als vorteilhaft, dass eine im Gegensatz zu sonstigen Vernietungen bei Druckknopf-Unterteilen größere Angriffsfläche vorhanden ist, über die sich angreifende Kräfte, insbesondere Zug- und Scherkräfte, besser verteilen können.

Anstelle der plättchenförmigen Ausgestaltung kann das Verstärkungselement 10 aber auch jedwede andere, geeignete Form haben und kann sich beispielsweise auch bis in den Bereich der Seitenwand 8 erstrecken. Dabei ist es möglich, dass dieses Verstärkungselement 10 zusätzlich Ausnehmungen oder Durchbrüche aufweist, in denen das Verbindungselement 2 z.B. mit pilzförmigen Fortsätzen befestigt ist.

Fig. 4 zeigt die Anordnung der Verbindungsvorrichtung 1 mit plättchenförmigem Verstärkungselement 10 auf dem Flächenelement 5 wobei das Verbindungselement 2 unter Zwischenanordnung eines Adapterstückes 12 mit dem Boden 6 und/oder der Seitenwand 8 verbunden ist. Das Adapterstück 12 ist in der gezeigten Ausführung aus einem Werkstoff, bevorzugt einem Polymer, gefertigt, der eine im Vergleich zum Polymer des Verbindungselementes 2 höhere Härte aufweist. Selbstverständlich kann dieses Adapterstück 12 aber auch aus einem Werkstoff mit zumindest ähnlichen mechanischen Eigenschaften bestehen, beispielsweise aus dem Polymer des Verbindungselementes 2, sodass Adapterstück 12 und Verbindungselement 2 einstückig ausgebildet werden können. Durch das Adapterstück 12 wird eine vom Boden 6 des Rastteils 3 beabstandete Anordnung des Verbindungselementes 2 erreicht, sodass auch alternative oder zusätzliche Befestigungsmittel an der Verbindungsvorrichtung anordenbar sind, wie z.B. Haken, Klammern oder dgl. Dies ist insbesondere dann von Vorteil, wenn das Flächenelement 5 höheren Belastungen ausgesetzt ist, und die Verbindungsvorrichtung 1 lediglich zur Positionierung des Flächenelementes 5 z.B. an einem Rahmen, wie beispielsweise einem Rahmen einer Projektionswand, verwendet wird, oder wenn an diesem Rahmen keine Gegenstücke vorhanden sind, wie z.B. Druckknopfoberteile bzw. Kugelteile, die mit dem Rastteil 3 der Verbindungsvorrichtung 1 zusammenwirken, wodurch das Flächenelement 5 auch in diesem letzten Fall mit anderen Befestigungsmitteln verwendet werden kann.

Eine erhöhte Beanspruchung des Adapterstückes 12 durch Befestigungsmittel, z.B. Klammern, Haken, die in eine Ausnehmung 13, die durch die beabstandete Anordnung des Verbindungselementes 2 vom Boden 6 entsteht, eingebracht werden, ist somit möglich, wobei gleichzeitig eine geschmeidige und dauerhafte Verbindungsfunktion gegeben ist.

Als vorteilhaft erweist sich diese Materialwahl bei einem Einsatz der Verbindungsvorrichtung 1 in der Witterung ungeschützt ausgesetzten Bereichen, z.B. bei Kälte, Hitze, Regen, Schnee, Eis, da auch bei längerer Exposition keine Beeinträchtigungen durch Korrosion, Bruch, Verformung oder plötzlich auftretende Materialspannungsschwankungen zu erwarten sind. Zudem ist eine solche Verbindung durch ihre materialspezifische Elastizität windsicherer als die bisher bekannten und dem Stand der Technik entsprechenden metallischen Druckknopfverbindungen. Dies betrifft vor allem die Verwendung von Projektions- oder Bildwänden bei Open-Air-Veranstaltungen bzw. bei Einsätzen mit großen Temperatur- und Feuchtigkeitsschwankungen. Natürlich ist auch eine Verwendung über einen längeren Zeitraum, z.B. bei großflächigen Dauerwerbeeinrichtungen, bei Netzabdeckungen für Baugerüste oder bei fixen Markisen bzw. Planen möglich. Ferner besteht die Möglichkeit, solche Verbindungen u. a. bei Umhängetaschen, Schultaschen, Handtaschen u. dgl. einzusetzen. Diese Verwendungsmöglichkeiten des Flächenelementes 5 sind selbstverständlich nicht auf die Ausführungsvariante "Adapterstück 12" beschränkt.

Der Fig. 4 ist weiters die Aufformung des Verbindungselements an eine Fläche 14 des Flächenelementes 5 zu entnehmen, wobei diese Aufformung an die Fläche 14 bevorzugt mit einer Prägung 15 erfolgen kann, wenngleich dies nicht zwingend ist. Diese Prägung 15 ist in der gegenständlichen Figur als Rändelung mit radialen Stegen ausgebildet, kann aber auch in anderer zweckmäßiger Art, z.B. ringförmig, zackenförmig, wellenförmig, punktförmig oder als Kombination verschiedener Prägungsformen, ausgeführt sein.

Aus Fig. 5 ist die Anordnung der in Fig. 1 näher beschriebenen Verbindungsvorrichtung 1 auf dem Flächenelement 5 ersichtlich. Auch in dieser Ausführungsvariante ist die gute und großflächige Einbindung des Flächenelements 5 an eine Verbindungsfläche 16 zu sehen. Daraus resultiert ein breites Anwendungsspektrum der Erfindung für viele Materialien, insbesondere Bildwandtücher, Projektionswände, Bildwände, Planen und sonstige flächige Gebilde mit einer Fläche aus zumindest einem Kunststoff, die mit dem Material des Verbindungselements 2 verschweißt werden können. Speziell in der Verwendung bei Projektions- und Bildwänden kommt der Vorteil zum Tragen, dass das Verbindungselement 2 durch das Verschweißen mit dem Flächenelement 5 von vorne und somit für den Betrachter von darauf projizierten Bildern unsichtbar ist, was die ausnutzbare Projektionsfläche merklich vergrößert. In einer Weiterentwicklung könnte die Verbindungsmethode auch bei Segeln, Zeltplanen, Kleidung etc. verwendet werden.

Schließlich kann der Fig. 6 entnommen werden, wie eine weitere Ausbildung einer im Adapterstück angeordneten Verbindungsvorrichtung 1 ausgeführt sein kann. Der Längsschnitt zeigt eine in Fig. 3 dargestellte Verbindungsvorrichtung 1 mit Verstärkungselement 10, das als eine Art "Verstärkungskrempe" ausgebildet ist. Durch die Ausbildung mit dem Verstärkungselement 10 ist eine besonders hohe Festigkeit gegenüber mechanischen Beanspruchungen, wie weiter oben mehrfach beschrieben, gegeben. Zwischen dem Verstärkungselement 10 und dem Rastteil 3 ist ein Teil des Adapterstücks 12 angeordnet, wobei die Abmessungen, insbesondere der Durchmesser, des Adapterstücks 12 je nach gefordertem Einsatzbereich variieren können. Das Adapterstück 12 kann auch teilweise oder zur Gänze durch den Durchbruch 7 des Bodens 6 ragen - in der gegenständlichen Figur ist eine Ausbildung gezeigt, bei der dies nicht der Fall ist.

In der gezeigten Variante ist die Verbindungsvorrichtung flacher als in Fig. 4 ausgeführt und trägt somit weniger beim jeweiligen praktischen Einsatz auf. Die tatsächliche Bauhöhe der Verbindungsvorrichtung 1 kann durch Adaptionen in der Fertigung an unterschiedliche Anforderungen angepasst werden (z.B. Anwendungen im Innen- bzw. Außenbereich, windexponierte Einsätze, neuartige bzw. genormte oder ungenormte Befestigungsmittel etc.).

Das Verbindungselement 2 kann nach einer weiteren Ausführungsvariante nicht nur den Boden 6 im Bereich dessen Durchbruchs überragen, sondern kann beispielsweise auch pilzartig in diesem Bereich ausgeführt sein, also der den Boden 6 überragende Teil des Verbindungselementes 2 einen größeren Durchmesser aufweisen, als der Durchmesser des Durchbruches. Damit wird erreicht, dass das Verbindungselement 2 allein durch diese Verrastung am Boden 6 des Rastteiles 3 befestigt werden kann, also auf zusätzliche Verbindungsmethoden verzichtet werden kann.

Des weiteren ist es möglich, dass das Adapterstück zumindest teilweise in die nutförmige Ausnehmung zwischen dem Boden 6 des Rastteiles 3 und dem Verstärkungselement 10 eingreifend angeordnet wird, wodurch auch hier wiederum eine erhöhte Festigkeit der Verbindungsvorrichtung 1 erhalten werden kann.

Das Verbindungselement 2 kann mit Durchbrüchen, z.B. Bohrungen, versehen sein, um ein Einfließen des Materials des Flächenelementes 5 während des Schweißens in diese Durchbrüche und damit eine verbesserte Verbindung zwischen dem Verbindungselement 2 und dem Flächenelement 5 zu erreichen.

Ferner könnte das Verbindungselement 2 in einer Tasche des Flächenelementes 5, welches in der Folge in diesem Bereich mehrlagig ausgeführt sein kann, vor dem Verschweißen eingesetzt werden, sodass durch das Verschweißen sowohl eine Anbindung des Verbindungselementes 2 an dessen unterer als auch oberer Oberfläche an dem Flächenelement 5, und damit eine erhöhte Festigkeit der Verbindung erreicht werden kann.

Dazu kann das Verbindungselement 2 z.B. flügelartige Fortsätze aufweisen, die gegebenenfalls wiederum mit zumindest einem Durchbruch versehen sind um damit das Eindringen des Materials des Flächenelementes 5 in diese Durchbrüche zu ermöglichen.

Derartige flügelförmige Fortsätze können auch bei dem Verstärkungselement 10 vorgesehen werden.

Da das Verschweißen von Kunststoffen hinlänglich bekannt ist, insbesondere auch das Hochfrequenzschweißen, erübrigt sich eine Erörterung an dieser Stelle, und sei der Fachmann an die einschlägige Literatur verwiesen.

Es soll jedoch nicht unerwähnt bleiben, dass es möglich ist, die Dicke des Verbindungselementes 2 derart zu wählen, dass während des Schweißens ein größerflächiges seitliches Verrinnen bzw. Ausdehnen des Polymers möglich ist, sich also die Fläche der Verbindungsstelle vergrößert, wodurch die Flächenbelastung weiter gesenkt und damit die Ausreißfestigkeit der Verbindungsvorrichtung 1 erhöht werden kann.

Selbstverständlich ist es auch möglich, die Druckknöpfe, wie in der DE 20 2004 015 008 U1 beschrieben, verschiebbar am bzw. im Projektionsrahmen anzuordnen und sei daher zur weiteren Offenbarung an dieser Stelle an diese DE-U1 verwiesen.

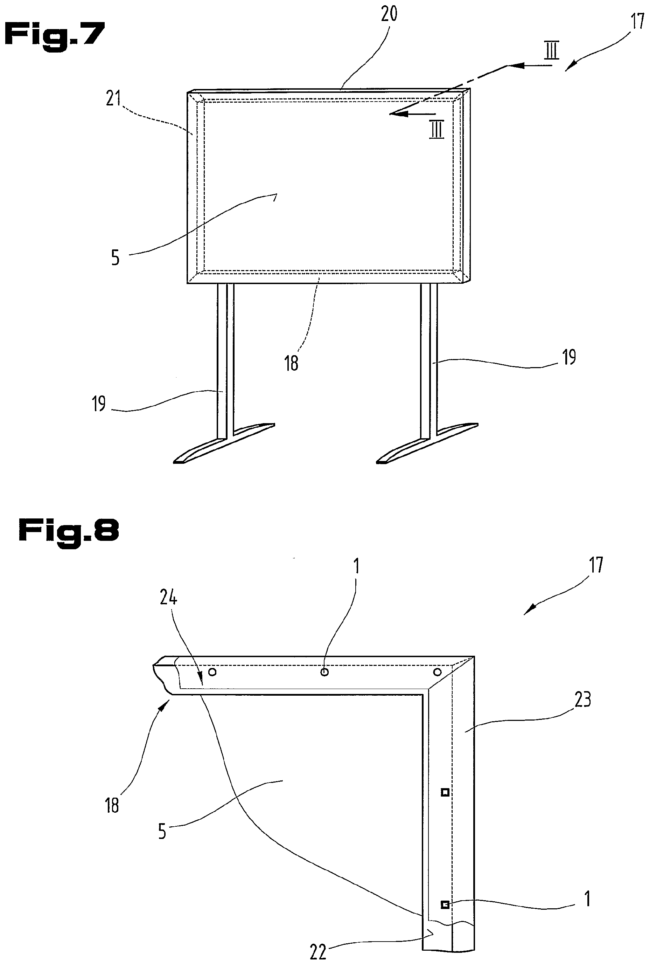

Fig. 7 zeigt in perspektivischer Darstellung eine Vorrichtung 17, das aus dem an einem Rahmensystem 18 (strichliert dargestellt) angeordneten Flächenelement 5 sowie zwei Fußstützen 19 besteht.

Das Flächenelement 5 kann insbesondere als Bildwandtuch, Projektionswand, Bildwand, Plane ausgebildet sein und ist bevorzugt aus Kunststoff gebildet. Um u. a. eine ermüdungsarme Bildbetrachtung zu ermöglichen, kann das Flächenelement 5 zumindest bereichsweise beschichtet sein, beispielsweise mit einer reflexionsvermindernden Schicht. Die Farbgebung des Flächenelements 5 ist bevorzugt hell, beispielsweise weiß, hellgrau u. dgl. gewählt, um eine möglichst farbgetreue Wiedergabe der darauf projizierten Bilder zu erreichen.

Die Fußstützen 19 können aus einem metallischen Werkstoff, bevorzugt Leichtmetall, beispielsweise Aluminium, hergestellt sein, es ist aber auch jedes andere, tragfähige Material dafür geeignet, wobei Werkstoffen mit möglichst geringem Gewicht bei möglichst hoher Standfestigkeit bzw. Widerstandsfähigkeit der Vorzug gegeben wird. Es können auch entsprechende Versteifungen angeordnet sein.

Die Fußstützen 19 können an der Unterseite im unteren Bereich der Vorrichtung 17 angeordnet sein, beispielsweise mit einem Abstand zu den senkrechten Außenkanten des Rahmensystems 18. Auch können die Fußstützen 19 weiter nach außen oder nach innen als gezeigt versetzt werden. Ebenso können die Fußstützen seitlich bündig mit dem Rahmensystem 18 abschließen.

Das Vorhandensein der Fußstützen 19 ist nicht zwingend erforderlich, sondern kann die Vorrichtung 17 auch beispielsweise an einer Wand angebracht, an einer Staffelei oder dgl. aufgestellt oder deckenhängend ausgeführt sein. Zum Erreichen einer größtmöglichen Mobilität der Vorrichtung 17 können die Fußstützen 19 auch mit Rädern, Rollen und dgl. (nicht dargestellt) versehen sein.

Auch ist es möglich, nur eine Fußstütze 19 bzw. einen Ständer oder auch drei, vier oder mehrere Fußstützen 19 anzubringen - je nach Anforderungen bzw. Gegebenheiten des Aufstellortes.

Das Rahmensystem 18 kann aus dem gleichen Werkstoff wie die Fußstütze 19 gebildet sein, es kann aber auch ein dazu unterschiedliches Material verwendet werden. Ebenso können innerhalb des Rahmensystems 18 zueinander unterschiedliche Werkstoffe eingesetzt werden, beispielsweise Fiberglas und Leichtmetall.

Das Rahmensystem 18 besteht aus mehreren Profilelementen 20, die, wie gezeigt, in rechteckiger Form angeordnet sind. Analog zu vielen Bild- bzw. Filmformaten kann für das Rahmensystem 18 eine rechteckige Form (wie gezeigt) gewählt werden, es ist aber auch möglich, dass die einzelnen Profilelemente 20 zumindest annähernd eine gleiche Länge aufweisen oder dass das Rahmensystem quadratisch, trapezförmig oder polygonal ausgebildet ist.

In der gegenständlichen Fig. 7 ist eine Rahmensystemvorderseite 21 dargestellt.

Fig. 8 zeigt einen Ausschnitt der rückwärtigen Ansicht der Vorrichtung 17 und stellt dar, wie das Flächenelement 5 am Rahmensystem 18 angeordnet bzw. befestigt ist.

Am Rahmensystem 18, insbesondere an einer Rahmensystem-Rückseite 22, sind mehrere Verbindungsvorrichtungen 1 bzw. Teile davon angeordnet. Diese Verbindungsvorrichtungen 1 können wie weiter oben beschrieben ausgebildet sein, es ist aber auch das Anbringen anders geformter bzw. ausgebildeter Verbindungsvorrichtungen möglich. Beispielsweise können Druckknöpfe oder Klettverschlüsse eingesetzt werden.

Ersichtlich ist hier auch, dass eine Rahmensystem-Seitenfläche 23 vollständig vom Flächenelement 5 bedeckt ist. Ergänzend dazu ist es auch möglich, dass die Rahmensystem-Seitenfläche 23 nur teilweise bzw. bereichsweise bedeckt ist, beispielsweise zu 1/3, zur Hälfte oder zu 70 %.

Die Befestigung des Flächenelements 5 am Rahmensystem 18 erfolgt derart, dass in einem Randbereich 24 des Flächenelements 5 Bestandteile der erfindungsgemäßen oder einer anderen Verbindungsvorrichtung 1 angebracht werden. Ebenso sind Teile der Verbindungsvorrichtung 1 an der Rahmensystemrückseite 22 angebracht. Durch Verbinden der einzelnen (Bestand)Teile der Verbindungsvorrichtung 1 wird nun das Flächenelement 5 am Rahmensystem 18 befestigt.

Diese Befestigung kann, wie bereits erwähnt, auf mehrere Arten erfolgen, und zwar mittels der erfindungsgemäßen Verbindungsvorrichtung 1, aber auch mit einem Druckknopf, einer Klammer, einem Haken, einem Klettverschluss, einem Klippverschluss, einen Einschubverschluss, einem Splintverschluss oder dgl.. Es sind auch verschiebliche Verbindungselemente bzw. -systeme, die z.B. als in einem Schienensystem laufende Befestigungen ausgebildet sein können, einsetzbar.

Bei Wahl eines zumindest bereichsweise elastischen Werkstoffes für das Flächenelement 5 kann die Positionierung der Verbindungsvorrichtungen 1 derart gewählt werden, dass das Flächenelement 5 straff bzw. faltenfrei am Rahmensystem 18 aufliegt. Dadurch ist dem Betrachter bzw. dem Publikum eine weitgehend verzeichnungsfreie Ansicht der projizierten Bilder ermöglicht.

Der Randbereich 24 kann auch verstärkt werden, z.B. durch bereichsweises Aufdoppeln oder durch eine höhere Materialdicke, wobei die Verstärkung auch durch mechanische Umformung, beispielsweise Prägung, erfolgen kann. Dies ist beispielsweise dann angezeigt, wenn die Anbringung der Verbindungsvorrichtung 1 ausschließlich an den Rahmenelementseitenflächen 23 erfolgt, um einem Überdehnen bzw. Ausreißen von Teilen des Flächenelements vorzubeugen, wobei die Verstärkung beim Anbringen an den Rahmenelement-Seitenflächen 23 aber nicht zwingend erforderlich ist.

Die Anordnung der Verbindungsvorrichtungen 1 kann, wie gezeigt, in regelmäßigen Abständen zueinander, aber auch gruppiert bzw. unregelmäßig erfolgen. Insbesondere können die Abstände und/oder die vertikale bzw. horizontale Positionierung zueinander bereits bei der Fertigung festgelegt bzw. variiert werden. Auch können beispielsweise das Rahmensystem 18 und/oder das Flächenelement 5 werksseitig mit einem vorbestimmbaren Raster an Verbindungsvorrichtungen 1 versehen werden.

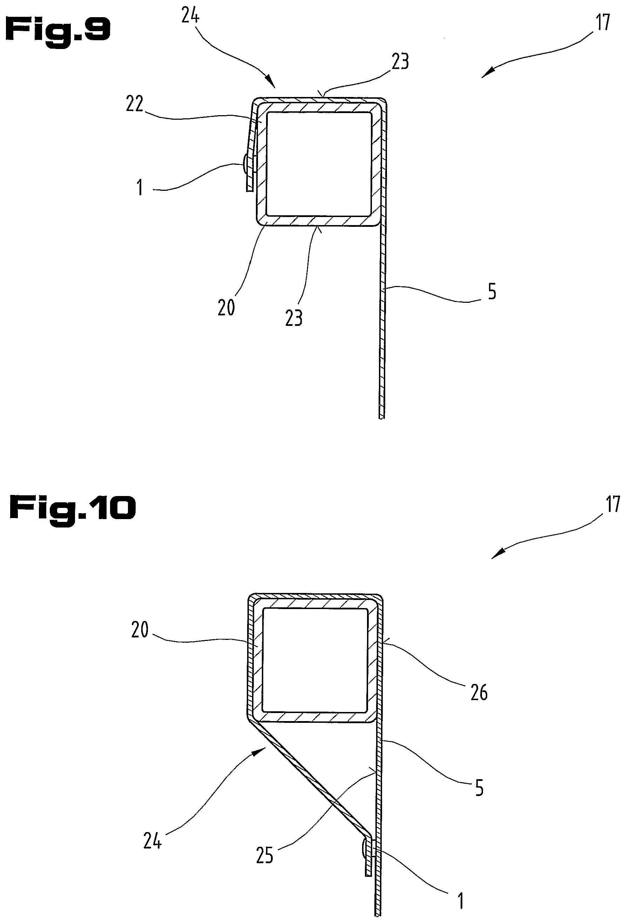

Fig. 9 und 10 zeigen schließlich jeweils einen Schnitt durch einen Teil der erfindungsgemäßen Vorrichtung 17.

Fig. 9 stellt im Querschnitt ein Profilelement 20 dar, hier ausgeführt als Hohlprofil, wobei, wie bereits erwähnt, auch andere Formen bzw. Werkstoffe des Profilelements Verwendung finden können. Dieses Profilelement 20 ist von einem Flächenelement 5 zumindest teilweise umschlossen.

Die Verbindungsvorrichtung 1 ist an der Rahmensystemrückseite 22 und im Randbereich 24 des Flächenelements 5 angeordnet. Die Verbindungsvorrichtung 1 kann sich aber auch im Bereich der Rahmensystemseitenfläche 23 befinden bzw. auch an weiteren Stellen des Profilelements 20 angebracht sein, beispielsweise in Eckbereichen.

Das Profilelement 20 kann auch einen zur gegenständlichen Darstellung abweichenden Querschnitt aufweisen, beispielsweise polygonal, rund oder quaderförmig ausgebildet sein. Die Wandstärke des Profilelements 20 wird nach Gesichtspunkten der Stabilität sowie Dauerhaftigkeit gewählt, beispielsweise ist es sinnvoll, bei größeren Stützweiten im Rahmensystem stärkere Profilelemente 20 zu verwenden.

Die Oberfläche des Profilelementes 20 bzw. des Rahmensystems 18 kann glatt, aber auch profiliert, gerillt oder mit Führungsschienen versehen sein.

Eine weitere Halterungsmöglichkeit ist aus Fig. 10 ersichtlich, wo das Profilelement 20 zur Gänze vom Flächenelement 5 umschlossen ist. An einer Flächenelementrückseite 25 ist ein Teil der Verbindungsvorrichtung 1 angebracht, der weitere Teil der Verbindungsvorrichtung 1 befindet sich im Randbereich 24 des Flächenelements 5. Eine Befestigung ist somit wie gezeigt möglich, ohne dass an einer Flächenelementvorderseite 26 Teile der Verbindungsvorrichtung 1 sichtbar wären, auch können gegebenenfalls (abhängig von der flächenmäßigen Ausdehnung des Flächenelements 5) auch mehrere Verbindungsvorrichtungen 1 neben bzw. hintereinander angebracht werden, um ein mögliches Verwerfen bzw. Ausreißen des Flächenelements 5 hintan zu halten.

Mit der erfindungsgemäßen Vorrichtung 17 kann auch ein und dasselbe Flächenelement 5 an unterschiedliche Rahmensysteme 18 angebracht bzw. für unterschiedlich große Rahmensysteme 18 verwendet werden. Diese Verstellmöglichkeit kann durch das Anbringen von mehreren Verbindungsvorrichtungen 1 an Rahmensystem 18 sowie Flächenelement 5 erreicht werden, beispielsweise wenn die Vorrichtung 17 sowohl nach Fig. 9 als auch nach Fig. 10 ausgebildet ist, also die Verbindungsvorrichtung 1 an unterschiedliche Befestigungspunkte angebracht wird.

Sind am Rahmensystem 18 Halte- und/oder Rastvorrichtungen angebracht, die z.B. zapfen- oder hakenartig ausgebildet sein können, so können diese Halte und/oder Rastvorrichtungen durch Durchbrüche, die im Randbereich 24 des Flächenelementes 5 angeordnet sind, ragen und so das Flächenelement 5 am Rahmensystem 18 haltern.

Die Ausführungsbeispiele zeigen mögliche Ausführungsvarianten der Verbindungsvorrichtung 1, des Flächenelementes 5, sowie der Vorrichtung 17, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mitumfasst.

Der Ordnung halber sei abschließend daraufhingewiesen, dass zum besseren Verständnis des Aufbaus der Verbindungsvorrichtung 1, des Flächenelementes 5 bzw. der Verbindungsvorrichtung 17 diese bzw. deren Bestandteile teilweise unmaßstäblich und/oder vergrößert und/ oder verkleinert dargestellt wurden.

Die den eigenständigen erfinderischen Lösungen zugrunde liegende Aufgabe kann der Beschreibung entnommen werden.

Vor allem können die einzelnen in den Fig. 1, 2; 3; 4; 5; 6; 7; 8; 9, 10 gezeigten Ausführungen den Gegenstand von eigenständigen, erfindungsgemäßen Lösungen bilden. Die diesbezüglichen erfindungsgemäßen Aufgaben und Lösungen sind den Detailbeschreibungen dieser Figuren zu entnehmen.

### Bezugszeichenaufstellung

- 1: Verbindungsvorrichtung
- 2: Verbindungselement
- 3: Rastteil
- 4: Ringfeder
- 5: Flächenelement

- 6: Boden
- 7: Durchbruch
- 8: Seitenwand
- 9: Vorsprung
- 10: Verstärkungselement

- 11: Ausnehmung
- 12: Adapterstück
- 13: Ausnehmung
- 14: Fläche
- 15: Prägung

- 16: Verbindungsfläche
- 17: Vorrichtung
- 18: Rahmensystem
- 19: Fußstütze
- 20: Profilelement

- 21: Rahmensystem-Vorderseite
- 22: Rahmensystem-Rückseite
- 23: Rahmensystem-Seitenfläche
- 24: Randbereich
- 25: Flächenelement-Rückseite

- 26: Flächenelement-Vorderseite

## Patentansprüche

1. Projektionswand mit einer Fläche (14), die zumindest teilweise aus zumindest einem Kunststoff besteht, an dem zumindest eine Verbindungsvorrichtung (1) angeordnet ist, wobei die Verbindungsvorrichtung (1) zum Verbinden der Projektionswand mit einem aus Profilelementen (20) gebildeten Rahmensystem (18) einer Vorrichtung (17) zur Wiedergabe von projizierten Bildern dient, wobei die Verbindungsvorrichtung (1) einen metallischen Rastteil (3) mit einem Boden (6), an dem zumindest eine Seitenwand (8) angeordnet ist, umfasst, der zur einrastenden Aufnahme eines, am Rahmensystem (18) angeordneten Gegenstückes ausgebildet ist, **dadurch gekennzeichnet, dass** am Boden (6) und an der zumindest einen Seitenwand (8) des Rastteils (3) ein Verbindungselement (2) aus einem schweißbaren Polymer angeordnet ist, das mit einem flachen, hutkrempenförmigen Rand ausgebildet ist, der Teil des zumindest annähernd tellerförmigen Verbindungselementes (2) ist, wobei das Verbindungselement (2) zwischen dem Rastteil (3) und der Fläche (14) angeordnet ist und der Rand über das Rastteil (2) seitlich vorragt, und wobei die Verbindungsvorrichtung (1) mit dem Kunststoff der Fläche (14) verschweißt ist, dass weiter der Boden (6) zumindest einen Durchbruch (7) aufweist, und das Verbindungselement (2) durch den Durchbruch (7) des Bodens (6) hindurch ragt und diesen in Richtung der zumindest einen Seitenwand (8) überragt, wobei ein den Boden (6) in Richtung der Seitenwand (8) überragendes Teil des Verbindungselementes (2) einen größeren Durchmesser aufweist als der Durchbruch (7) des Bodens (6), und dass die Seitenwand (8) einen Vorsprung (9) aufweist, und das Verbindungselement (2) die Seitenwand (8) zumindest bis in den Bereich des Vorsprunges (9) überdeckt.

2. Projektionswand nach Anspruch 1, **dadurch gekennzeichnet, dass** das Verbindungselement (2) an die Fläche (14) mit einer werkzeugspezifischen Prägung (15) aufgeformt ist.

3. Projektionswand nach Anspruch 1 oder 2, **dadurch gekennzeichnet, dass** die Fläche (14) zumindest im Bereich der Verbindungsvorrichtung (1) mehrlagig ausgebildet ist.

4. Projektionswand nach einem der vorhergehenden Ansprüche, **dadurch gekennzeichnet, dass** am Boden (6), der Seitenwand (8) gegenüberliegend, ein Verstärkungselement (10) angeordnet ist.

5. Projektionswand nach Anspruch 4, **dadurch gekennzeichnet, dass** das Verstärkungselement (10) teilweise beabstandet zum Boden (6) unter Ausbildung einer, insbesondere nutförmigen, Ausnehmung (11) an diesem befestigt ist.

6. Projektionswand nach Anspruch 5, **dadurch gekennzeichnet, dass** das Verbindungselement (2) in die Ausnehmung (11) eingreift.

7. Projektionswand nach einem der vorhergehenden Ansprüche, **dadurch gekennzeichnet, dass** das Rastteil (3) als Druckknopfunterteil ausgebildet ist.

8. Vorrichtung (17) zur Wiedergabe von projizierten Bildern, umfassend eine Projektionswand mit einer Vorderseite, einer Rückseite und mit einer Fläche (14), die zumindest teilweise aus zumindest einem Kunststoff gebildet ist, und an der zumindest ein Teil zumindest einer Verbindungsvorrichtung (1) angeordnet ist, zumindest ein aus Profilelementen (20) gebildetes Rahmensystem (18) mit einer Rahmensystem-Vorderseite (21), einer Rahmensystem-Rückseite (22) und zumindest einer Rahmensystem-Seitenfläche (23), wobei ein weiterer Teil der Verbindungsvorrichtung (1), der mit dem ersten Teil im verbundenen Zustand zusammenwirkt, an der Rahmensystem-Rückseite (22) und/oder an der(den) Rahmensystem-Seitenfläche(n) (23) angeordnet ist, **dadurch gekennzeichnet, dass** die Projektionswand entsprechend einem der Ansprüche 1 bis 7 ausgebildet ist.

9. Vorrichtung (17) nach Anspruch 8, **dadurch gekennzeichnet, dass** der erste Teil der Verbindungsvorrichtung (1) an der der Projektionswand gegenüber liegenden Seite angeordnet ist.

10. Vorrichtung (17) nach Anspruch 8 oder 9, **dadurch gekennzeichnet, dass** die Projektionswand größer als die vom Rahmensystem (18) umschriebene Fläche ist, insbesondere diese Fläche zumindest bereichsweise überragt.

11. Vorrichtung (17) nach Anspruch 10, **dadurch gekennzeichnet, dass** die die Fläche zumindest bereichsweise überragenden Segmente des Flächenelementes (5) das Rahmensystem (18) zumindest bereichsweise zumindest teilweise umhüllen, z.B. diese um Außenkanten des Rahmensystems (18) umgeschlagen werden.

12. Vorrichtung (17) nach Anspruch 11, **dadurch gekennzeichnet, dass** die Segmente durch die Verbindungsvorrichtung (1) am Rahmensystem (18) gehaltert werden.

13. Vorrichtung (17) nach Anspruch 11 oder 12, **dadurch gekennzeichnet, dass** die Segmente durch die Verbindungsvorrichtung (1) an der Projektionswand gehaltert werden.

14. Vorrichtung (17) nach einem der Ansprüche 11 bis 13, **dadurch gekennzeichnet, dass** die Verbindungsvorrichtung (1) als Druckknopf ausgebildet ist.

15. Vorrichtung (17) nach einem der Ansprüche 11 bis 14, **dadurch gekennzeichnet, dass** an der Projektionswand, insbesondere im Randbereich, zumindest ein Durchbruch angeordnet ist.

16. Vorrichtung (17) nach einem der Ansprüche 11 bis 15, **dadurch gekennzeichnet, dass** an der Projektionswand im Randbereich des Durchbruchs zumindest bereichsweise eine Verstärkung, bevorzugt gebildet aus einem metallischen Werkstoff, z.B. eine Öse, ein Ring u. dgl., angeordnet ist.

17. Vorrichtung (17) nach einem der Ansprüche 11 bis 16, **dadurch gekennzeichnet, dass** am Rahmensystem zumindest eine Halte- und/oder Rastvorrichtung angeordnet ist.

18. Vorrichtung (17) nach Anspruch 17, **dadurch gekennzeichnet, dass** die Halte- und/oder Rastvorrichtung zumindest bereichsweise durch den Durchbruch hindurchragt.

19. Vorrichtung (17) nach Anspruch 17 oder 18, **dadurch gekennzeichnet, dass** an einem die Halte/ und oder Rastvorrichtung überragenden Teil nach Anbringen der Projektionswand (5) eine Sicherungsvorrichtung, beispielsweise ein Zapfen, ein Splint, angeordnet ist.

20. Vorrichtung (17) nach Anspruch 19, **dadurch gekennzeichnet, dass** der überragende Teil ringförmig oder nasenförmig oder hakenartig ausgebildet ist.

## Claims

1. Projection screen having a surface (14) which consists at least partially of at least one synthetic material and on which at least one connecting device (1) is arranged, wherein the connecting device (1) is used to connect the projection screen to a frame system (18), formed of profile elements (20), of a device (17) for reproducing projected images, wherein the connecting device (1) includes a metallic latching part (3) having a base (6) on which at least one side wall (8) is arranged, said latching part being formed to receive, in a latching manner, a counter-piece arranged on the frame system (18), **characterised in that** a connecting element (2) consisting of a weldable polymer is arranged on the base (6) and on the at least one side wall (8) of the latching part (3) and is formed with a flat, brim-shaped edge which is part of the at least approximately plate-shaped connecting element (2), wherein the connecting element (2) is arranged between the latching part (3) and the surface (14) and the edge protrudes laterally beyond the latching part (2), and wherein the connecting device (1) is welded to the synthetic material of the surface (14), further **in that** the base (6) comprises at least one opening (7) and the connecting element (2) protrudes through the opening (7) of the base (6) and protrudes beyond this in the direction of the at least one side wall (8), wherein a part of the connecting element (2) protruding beyond the base (6) in the direction of the side wall (8) has a larger diameter than the opening (7) in the base (6), and **in that** the side wall (8) comprises a protrusion (9) and the connecting element (2) covers the side wall (8) at least as far as the region of the protrusion (9).

2. Projection screen as claimed in claim 1, **characterised in that** the connecting element (2) is formed on the surface (14) which a tool-specific embossment (15).

3. Projection screen as claimed in claim 1 or 2, **characterised in that** the surface (14) is formed in multiple layers at least in the region of the connecting device (1).

4. Projection screen as claimed in any one of the preceding claims, **characterised in that** a reinforcement element (10) is arranged on the base (6) opposite the side wall (8).

5. Projection screen as claimed in claim 4, **characterised in that** the reinforcement element (10) is attached to the base (6) at least partially spaced apart therefrom forming a recess (11), in particular a groove-shaped recess.

6. Projection screen as claimed in claim 5, **characterised in that** the connecting element (2) engages into the recess (11).

7. Projection screen as claimed in any one of the preceding claims, **characterised in that** the latching part (3) is formed as a press stud lower part.

8. Device (17) for reproducing projected images, comprising a projection screen having a front side, a rear side and a surface (14) which is formed at least partially from at least one synthetic material, and on which at least a part of at least one connecting device (1) is arranged, at least one frame system (18) formed from profile elements (20), comprising a frame system front side (21), a frame system rear side (22) and at least one frame system side surface (23), wherein a further part of the connecting device (1) which cooperates with the first part in the connected state, is arranged on the frame system rear side (22) and/or on the frame system side surface(s) (23), **characterised in that** projection screen is formed as claimed in any one of claims 1 to 7.

9. Device (17) as claimed in claim 8, **characterised in that** the first part of the connecting device (1) is arranged on the side opposite the projection screen.

10. Device (17) as claimed in claim 8 or 9, **characterised in that** the projection screen is larger than the surface described by the frame system (18), in particular projects beyond this surface at least in regions.

11. Device (17) as claimed in claim 10, **characterised in that** the segments of the surface element (5) projecting beyond the surface at least in regions at least partially enclose the frame system (18) at least in regions, e.g. these are turned over outer edges of the frame system (18).

12. Device (17) as claimed in claim 11, **characterised in that** the segments are held by the connecting device (1) on the frame system (18).

13. Device (17) as claimed in claim 11 or 12, **characterised in that** the segments are held by the connecting device (1) on the projection screen.

14. Device (17) as claimed in any one of claims 11 to 13, **characterised in that** the connecting device (1) is formed as a press stud.

15. Device (17) as claimed in any one of claims 11 to 14, **characterised in that** at least one opening is arranged on the projection screen, in particular in the edge region.

16. Device (17) as claimed in any one of claims 11 to 15, **characterised in that** a reinforcement, preferably formed from a metallic material, e.g. an eye, a ring and the like, is arranged on the projection screen in the edge region of the opening at least in regions.

17. Device (17) as claimed in any one of claims 11 to 16, **characterised in that** at least one retaining and/or latching device is arranged on the frame system.

18. Device (17) as claimed in claim 17, **characterised in that** the retaining and/or latching device projects through the opening at least in regions.

19. Device (17) as claimed in claim 17 or 18, **characterised in that** a securing device, for example a pin, a split pin, is arranged on a part projecting beyond the retaining and/or latching device after attachment of the projection screen (5).

20. Device (17) as claimed in claim 19, **characterised in that** the projecting part is formed to be ring-shaped or nose-shaped or hook-shaped.

## Revendications

1. Ecran de projection avec une surface (14) qui est composée au moins en partie d'au moins une matière plastique, au niveau de laquelle est disposé au moins un dispositif d'assemblage (1), ledit dispositif d'assemblage (1) servant à assembler l'écran de projection avec un système de cadre (18), formé d'éléments profilés (20), d'un dispositif (17) pour reproduire des images projetées, le dispositif d'assemblage (1) comprenant un élément d'encliquetage (3) métallique avec un fond (6), au niveau duquel est disposée au moins une paroi latérale (8), qui est réalisé pour loger par encliquetage une contre-pièce disposée au niveau du système de cadre (18), **caractérisé en ce qu'**au niveau du fond (6) et au niveau d'au moins une paroi latérale (8) de l'élément d'encliquetage (3), est disposé un élément d'assemblage (2) constitué d'un polymère soudable, qui est réalisé avec un bord plat, en forme de bord d'un chapeau, qui est partie de l'élément d'assemblage (2) au moins à peu près en forme d'assiette, l'élément d'assemblage (2) étant disposé entre l'élément d'encliquetage (3) et la surface (14) et le bord faisant saillie latéralement au-dessus de l'élément d'encliquetage (3)⁾ et le dispositif d'assemblage (1) étant soudé avec la matière plastique de la surface (14), **en ce qu'**en outre, le fond (6) présente au moins un perçage (7) et l'élément d'assemblage (2) passe au travers du perçage (7) du fond (6), et dépasse celui-ci en direction d'au moins une paroi latérale (8), un élément, dépassant le fond (6) en direction de la paroi latérale (8), de l'élément d'assemblage (2) présentant un diamètre supérieur à celui du perçage (7) du fond (6), et **en ce que** la paroi latérale (8) présente une saillie (9), et l'élément d'assemblage (2) couvre la paroi latérale (8) au moins jusque dans la zone de la saillie (9).

2. Ecran de projection selon la revendication 1, **caractérisé en ce que** l'élément d'assemblage (2) est surmoulé au niveau de la surface (14) avec une empreinte (15) spécifique à un outil.

3. Ecran de projection selon la revendication 1 ou 2, **caractérisé en ce que** la surface (14) est réalisée en plusieurs couches au moins dans la zone du dispositif d'assemblage (1).

4. Ecran de projection selon l'une des précédentes revendications, **caractérisé en ce qu'**au niveau du fond (6), est disposé un élément de renforcement (10) opposé à la paroi latérale (8).

5. Ecran de projection selon la revendication 4, **caractérisé en ce que** l'élément de renforcement (10) est fixé, en partie à distance du fond (6) en réalisant un évidement (11) en particulier en forme de rainure, au niveau de celui-ci.

6. Ecran de projection selon la revendication 5, **caractérisé en ce que** l'élément d'assemblage (2) est en prise dans l'évidement (11).

7. Ecran de projection selon l'une des précédentes revendications, **caractérisé en ce que** l'élément d'encliquetage (3) est réalisé en tant que partie inférieure de bouton-poussoir.

8. Dispositif (17) pour reproduire des images projetées, comprenant un écran de projection avec une face avant, une face arrière et avec une surface (14) qui est composée au moins en partie d'au moins une matière plastique, et au niveau de laquelle est disposé au moins un élément d'au moins un dispositif d'assemblage (1), au moins un système de cadre (18), formé d'éléments profilés (20), avec une face avant de système de cadre (21), une face arrière de système de cadre (22) et au moins une face latérale de système de cadre (23), un autre élément du dispositif d'assemblage (1) qui concoure avec le premier élément à l'état assemblé, étant disposé au niveau de la face arrière du système de cadre (22) et/ou au niveau de la/des face(s) latérale(s) du système de cadre (23), **caractérisé en ce que** l'écran de projection est réalisé conformément à l'une des revendications 1 à 7.

9. Dispositif (17) selon la revendication 8, **caractérisé en ce que** le premier élément du dispositif d'assemblage (1) est disposé au niveau du côté en face de l'écran de projection.

10. Dispositif (17) selon la revendication 8 ou 9, **caractérisé en ce que** l'écran de projection est plus grand que la surface définie par le système de cadre (18) et dépasse en particulier cette surface au moins par zone.

11. Dispositif (17) selon la revendication 10, **caractérisé en ce que** les segments, dépassant au moins partiellement la surface, de l'élément de surface (5) entourent le système de cadre (18) au moins dans certaines zones, au moins en partie, par exemple, ceux-ci sont rabattus autour des bords extérieurs du système de cadre (18).

12. Dispositif (17) selon la revendication 11, **caractérisé en ce que** les segments sont supportés par le dispositif d'assemblage (1) au niveau du système de cadre (18).

13. Dispositif (17) selon la revendication 11 ou 12, **caractérisé en ce que** les segments sont supportés par le dispositif d'assemblage (1) au niveau de l'écran de projection.

14. Dispositif (17) selon l'une des revendications 11 à 13, **caractérisé en ce que** le dispositif d'assemblage (1) est réalisé en tant que bouton-poussoir.

15. Dispositif (17) selon l'une des revendications 11 à 14, **caractérisé en ce qu'**au niveau de l'écran de projection, en particulier dans la zone de bord, est disposé au moins un perçage.

16. Dispositif (17) selon l'une des revendications 11 à 15, **caractérisé en ce qu'**au niveau de l'écran de projection, dans la zone de bord du perçage, est disposé au moins dans certaines zones, un renfort, de préférence formé à partir d'un matériau métallique, par exemple, un oeillet, un anneau ou similaire.

17. Dispositif (17) selon l'une des revendications 11 à 16, **caractérisé en ce qu'**au niveau du système de cadre, est disposé au moins un dispositif d'encliquetage et/ou de maintien.

18. Dispositif (17) selon la revendication 17, caractérisé en ce le dispositif d'encliquetage et/ou de maintien passe au moins partiellement à travers le perçage.

19. Dispositif (17) selon la revendication 17 ou 18, **caractérisé en ce qu'**au niveau d'un élément dépassant le dispositif d'encliquetage et/ou de maintien, est disposé un dispositif de sécurité, par exemple, une cheville, une goupille, après mise en place de l'écran de projection (5).

20. Dispositif (17) selon la revendication 19, **caractérisé en ce que** l'élément faisant saille est réalisé en forme d'anneau ou en forme de nez ou à la manière d'un crochet.
